# FASCICULE DE BREVET EUROPEEN

(11) **EP 3 931 922 B1**
(45) Date de publication et mention de la délivrance du brevet: **09.11.2022**
(21) Numéro de dépôt: 20713715.9
(22) Date de dépôt: 25.02.2020
(51) Int. Cl.: H01T 13/20, F02C 7/266, F28D 21/00, F25J 3/04, F28F 21/08

(54) **APPAREIL D'ÉCHANGE DE CHALEUR ET DE MATIÈRE**
VORRICHTUNG ZUM AUSTAUSCH VON WÄRME UND MATERIAL
APPARATUS FOR EXCHANGING HEAT AND MATERIAL

(30) Priorité: 25.02.2019 FR 1901869; 25.02.2019 FR 1901868; 25.02.2019 FR 1901872
(43) Date de publication de la demande: 05.01.2022
(73) Titulaire: L'AIR LIQUIDE, SOCIETE ANONYME POUR L'ETUDE ET L'EXPLOITATION DES PROCEDES GEORGES CLAUDE, 75007 Paris (FR)
(72) Inventeur: MASLIAH, Eric, 94781 VITRY SUR SEINE (FR); MARIE, Camille, 94781 VITRY SUR SEINE (FR); AMANT, Ludovic, 94781 VITRY SUR SEINE (FR); LE BOT, Patrick, 94503 CHAMPIGNY SUR MARNE (FR); FRIMAT, David, 78350 LES LOGES EN JOSAS (FR); BEDNARSKI, David, 78350 LES LOGES EN JOSAS (FR); TRANIER, Jean-Pierre, 78350 LES LOGES EN JOSAS (FR)
(74) Mandataire: Air Liquide
(86) Numéro de dépôt international: PCT/FR2020/050350
(87) Numéro de publication internationale: WO 2020/174169

(56) Documents cités:
- WO-A1-91/00141
- WO-A1-2012/045717
- US-B1- 6 295 839
- O.S.L. BRUINSMA ET AL: "The structured heat integrated distillation column", CHEMICAL ENGINEERING RESEARCH AND DESIGN, vol. 90, no. 4, 1 avril 2012 (2012-04-01), pages 458-470, XP055624888, AMSTERDAM, NL ISSN: 0263-8762, DOI: 10.1016/j.cherd.2011.08.023 cité dans la demande

## Description

La présente invention est relative à un appareil de transfert de matière et d'échange de chaleur direct, notamment entre un gaz et un liquide. Un tel appareil ayant les caractéristiques du préambule de la revendication 1 est connu de WO 91/00141.

Les équipements de transfert de matière et d'échange de chaleur direct sont aujourd'hui utilisés dans une grande variété de procédés. Par exemple, les colonnes de transfert de matière permettent de mettre en œuvre des procédés de lavage, des procédés de mélange, des procédés de refroidissement, des procédés de réchauffage ou encore des procédés de distillation. L'ensemble de ces procédés reposent sur un même principe de base, à savoir le contact direct entre au moins deux fluides. Ces deux fluides sont, de préférence un gaz et un liquide mais pourraient être deux liquides ou deux gaz.

De telles colonnes comprennent ainsi au moins un médium de transfert de matière et d'échange de chaleur direct, traversé par les deux fluides à contre-courant ou à co-courant et au niveau duquel le transfert de matière et d'échange de chaleur direct entre ces deux fluides s'opère.

Dans un procédé de distillation, un débit d'alimentation gazeux ou diphasique est envoyé à une colonne de transfert de matière et d'échange de chaleur direct, cette colonne étant réchauffée en cuve et/ou refroidie en tête pour établir dans une colonne une série d'étapes successives de condensation et de vaporisation du débit envoyé à la colonne. Il en résulte un écoulement gazeux qui monte dans la colonne en s'enrichissant en au moins un composant plus léger du débit d'alimentation à contre-courant d'un écoulement liquide qui descend dans la colonne par gravité en s'enrichissant en au moins un composant plus lourd du débit d'alimentation.

Dans un procédé de lavage, un débit d'alimentation gazeux ou diphasique est envoyé à une colonne de transfert de matière et d'échange de chaleur direct, cette colonne étant également alimentée en tête par un liquide qui absorbe sélectivement un ou plusieurs composants du débit d'alimentation. Il en résulte un écoulement gazeux qui monte dans la colonne en s'appauvrissant en composant(s) sélectivement absorbé(s) à contre-courant d'un écoulement liquide qui descend dans la colonne en s'enrichissant en composant(s) sélectivement absorbé(s).

Dans un procédé de rectification utilisant la chaleur générée quand deux phases se mélangent dit de mélange, un débit d'alimentation liquide est envoyé en tête d'une colonne et un débit d'alimentation gazeux est envoyé en cuve, le produit du procédé étant soutiré au milieu de la colonne, tel que décrit dans FR2143986, FR2584803 et d'autres brevets classés en CPC F25J3/0446 et F25J3/04466.

Habituellement on fabrique les équipements de transfert de matière et d'échange de chaleur direct en disposant des lamelles ondulées, rassemblées en blocs pour former des garnissages structurés, à l'intérieur d'une virole cylindrique. La méthode peut être lente et coûteuse, à cause des dimensions des colonnes et également à cause de la complexité de fabrication et d'installation des garnissages. Par ailleurs, quand les fluides mis en œuvre sont à température cryogéniques, l'aluminium est un matériau adapté à la fabrication des garnissages, voire de la virole de la colonne.

Puisque les garnissages structurés nécessitent tout une ligne de fabrication, il n'est pas possible d'adapter précisément ces garnissages à l'échange de matière et/ou de chaleur qu'ils doivent réaliser.

Par exemple, seulement certaines densités, certains angles d'ondulation et certaines hauteurs de pli seront disponibles. De plus, les garnissages sont volumineux et difficiles à stocker.

Il est également connu de produire un corps d'échangeur de chaleur en formant un empilage de plaques rectangulaires, séparés par des ailettes perforées et ensuite en brasant l'empilage pour former un corps ayant une pluralité de passages.

Ce genre de corps est ensuite utilisé pour transférer de la chaleur indirectement d'un fluide à l'autre, le fluide dans un passage à ailettes transférant sa chaleur à travers la plaque au passage à ailettes adjacent ou à travers des plaques aux passages à ailettes adjacents.

Dans ce cas, il n'y a pas de transfert de matière entre les deux fluides. Le standard de l'ALPEMA « The standards of the brazed aluminium plate-fin heat exchanger manufacturers' association » décrit ces échangeurs de chaleur indirect entre deux ou plusieurs fluides réalisés en aluminium brasé.

Ce brasage est un procédé d'assemblage permanent qui établit un lien métallique entre les plaques et les ailettes.

Si ce genre de corps est utilisé de manière courante comme échangeur de chaleur indirect, il n'a jamais été exploité à échelle industrielle pour la séparation des fluides à températures en dessous de 0°C. L'aluminium est un matériau très adapté à ce mode de fabrication.

Dans l'art antérieur, une unité de séparation d'air par cryogénie comprend généralement des échangeurs de chaleur à plaques brasées qui forment en particulier la ligne d'échange thermique principale de l'unité de séparation d'air par cryogénie et le vaporiseur-condenseur mettant en relation d'échange thermique la colonne moyenne pression et la colonne basse pression. Ces deux colonnes de distillation dans lesquelles on réalise de l'échange de matière ne sont pas intégrées dans les matrices brasées qui constituent ces échangeurs de chaleur à plaques brasées.

Le brevet EP0767352 propose d'intégrer un fonction déflegmation dans ces matrices brasées c'est-à-dire une zone dans laquelle on réalise simultanément de l'échange thermique indirect et de l'échange de matière et de l'échange thermique direct.

Le brevet US6295839 propose d'intégrer dans une matrice brasée des fonctions d'échange de chaleur indirect et de distillation mais il ne décrit pas comment concevoir une telle matrice brasée (aussi appelée « core ») de manière à avoir une solution que l'on puisse braser et qui ait la résistance mécanique nécessaire pour résister à la pression de fonctionnement.

La publication scientifique « The structured heat integrated distillation column », Bruinsma O.S.L. et al., Chem Eng Res Des (2012) compare les performances d'ondes classiques d'échangeurs en aluminium brasé telles que décrites dans le document de l'ALPEMA « The standards of the brazed aluminium plate-fin heat exchanger manufacturers' association » avec du garnissage ondulé croisé brasé dans une matrice. Dans le cas du garnissage ondulé-croisé, pour assurer la résistance mécanique, une tôle séparatrice perforée de 1 mm est insérée avant brasage entre les deux tôles ondulées de manière à braser l'ensemble. L'efficacité de l'onde classique est très mauvaise avec une HETP (hauteur équivalente d'un plateau théorique) de l'ordre de 1.4 mètre. L'efficacité du garnissage ondulé-croisé est meilleure avec des HETP comprises entre 0.2 et 0.4 mètre.

Néanmoins, si l'on voulait augmenter l'efficacité du garnissage, il faudrait augmenter sa densité, typiquement au-delà de 1000 m2/m3 voire 1500 m2/m3 pour avoir des HETP inférieures à 100 mm. Pour cela, la hauteur des ondulations passerait de 8-9 mm à 3-4 mm et nécessiterait de doubler le nombre de tôles séparatrices.

La présente invention vise à proposer un appareil de transfert de matière et d'échange de chaleur direct qui soit efficace (par exemple en permettant d'avoir des HETP inférieures à 100 mm), qui puisse résister à la pression, qui soit facile à fabriquer à moindre coût et dans lequel on puisse dans un mode préférentiel de réalisation intégrer l'échange thermique indirect.

En particulier, les éléments de l'appareil peuvent être trouvés facilement et à moindre coût dans le commerce dans une large gamme de dimensions et de géométries. Il est ainsi facile d'adapter les éléments aux conditions précises de fonctionnement de l'appareil, telles que la pression, la température, la composition des fluides impliqués.

Les éléments de l'appareil peuvent être pré-achetés et stockés et combinés de différentes manières pour produire un appareil convenant parfaitement aux besoins du client avec un temps de fabrication réduite.

Le premier but de l'invention est de dissocier les fonctions de résistance mécanique et de surface de contact pour le transfert de matière et d'échange de chaleur direct, notamment entre un gaz montant et un liquide descendant par gravité. Ainsi, la majorité de cette surface de contact ne participe pas significativement à la résistance mécanique à la pression de l'appareil. Cela permet dans le cas du brasage de ne pas avoir à multiplier les tôles séparatrices tout en permettant d'utiliser un garnissage ordonné ou en vrac de grande densité, typiquement supérieur à 750 m2/m3 voire 1000 m2/m3.

Il est également un but de l'invention de produire un appareil particulièrement résistant à la pression à quantité de matière d'appareil égale. En effet, l'usage d'une pluralité de colonnes garnies permet de mieux maîtriser les poussées dues à la pression et de réduire la quantité de matériel requis. Un utilisant une pluralité de colonnes garnies en parallèle, on réduit le diamètre hydraulique des dites colonnes.

Or des colonnes de faibles diamètre hydraulique à garnissage donné (quelques centimètres) sont nettement plus efficaces que des colonnes industrielles typiques qui font entre 1 et 10 mètre(s) de diamètre.

Si une colonne d'un mètre de diamètre est divisée en mille colonnes en parallèle, le diamètre hydraulique de ces colonnes est divisé par la racine carrée de 1000 et passe donc à 32 cm.

Il est également un but de l'invention de proposer un appareil ayant de multiples fonctionnalités combinés dans un seul assemblage de plaques.

Selon un autre objet de l'invention, il est prévu un appareil de transfert de matière et d'échange de chaleur direct constitué par une pluralité de colonnes, un seul empilement d'au moins deux, de préférence au moins trois, plaques pleines métalliques de section rectangulaire, les plaques étant substantiellement toutes de même forme et dimensions et parallèles à une direction déterminée , chaque plaque étant séparée de la plaque adjacente, au moins dans une première zone de transfert de matière et d'échange de chaleur direct de l'appareil, par un groupe de colonnes creuses en métal qui sont alignées et de section polygonale ayant au moins deux surfaces parallèles, de préférence rectangulaire, voire carrée, les canaux étant parallèles à la direction déterminée et contiguës les unes aux autres, éventuellement tous les colonnes de l'appareil étant parallèles les unes aux autres, les colonnes de chaque groupe étant chacune en contact avec les deux plaques métalliques de part et d'autre du groupe, au moins certaines des colonnes d'un groupe, voire de chaque groupe, voire toutes les colonnes d'un groupe, contenant un moyen d'échange de chaleur et de matière, par exemple un garnissage tel qu'un garnissage métallique structuré ou en vrac.

Selon d'autres aspects facultatifs :
- les plaques sont solidarisées avec les colonnes par brasage ou par collage.
- les colonnes sont solidarisées par brasage ou par collage.
- les plaques, les colonnes et éventuellement le moyen d'échange de chaleur et de matière sont tous formés i) du même métal ou ii) du même alliage ou iii) d'alliages du même métal principal. Il sera compris que les plaques et/ou les colonnes peuvent porter un revêtement, par exemple de matériau de brasage. La matière de la plaque et/ou la colonne est celle couvert par le revêtement. Le revêtement peut varier d'une plaque ou d'une colonne à une autre.
- les plaques et/ou les colonnes et/ou le moyen de transfert de matière et d'échange de chaleur direct et est/sont en un des métaux suivants : aluminium, acier inoxydable, nickel, cuivre ou titane.
- la dimension minimale d'un bord de la section d'une colonne est supérieure à 2 cm et de préférence supérieure à 4 cm.
- la longueur d'une plaque est au moins égale à 1 m, de préférence au moins égale à 2 m, voire au moins égale à 4 m.
- la première zone constitue une partie de l'appareil délimitée par la largeur et l'épaisseur de l'empilement et par une partie de la longueur de l'empilement.
- l'appareil comprend des moyens pour alimenter au moins les deux tiers, de préférence toutes les colonnes d'au moins la première zone avec le même fluide.
- l'appareil comprend des moyens pour recueillir le même fluide d'au moins les deux tiers, de préférence de toutes les colonnes d'au moins une première zone.
- l'empilement comprend une deuxième zone, qui est une zone d'échange de chaleur indirect, constituée par une partie de l'appareil délimitée par la largeur et l'épaisseur de l'empilement et par une partie de la longueur de l'empilement, comprenant des moyens pour alimenter un passage sur deux des passages entre deux plaques par un fluide provenant de la première zone ainsi que des moyens pour alimenter le reste des passages de la deuxième zone par un fluide calorigène ou frigorigène afin de permettre un échange de chaleur indirect avec ce fluide.
- l'appareil comprend une deuxième zone d'échange de chaleur direct constituant une partie de l'appareil délimitée par la largeur et l'épaisseur de l'empilement et par une partie de la longueur de l'empilement et comprenant des moyens pour alimenter au moins les deux tiers, de préférence toutes les colonnes d'une zone avec le même fluide et/ou des moyens pour recueillir le même fluide d'au moins les deux tiers, de préférence de toutes les colonnes d'une zone.

Selon un autre objet de l'invention, il est prévu un appareil de séparation, par exemple par distillation ou par lavage, pour usage à des températures en dessous de 0°C comprenant un appareil d'échange de matière et de chaleur tel que décrit ci-dessus, l'appareil étant orienté de sorte qu'en usage un liquide introduit dans une colonne coule dans chaque colonne par effet de gravitation, des moyens pour envoyer un fluide à séparer au corps d'échange comprenant au moins deux composants, des moyens pour sortir d'au moins une extrémité de l'appareil au moins un fluide séparé enrichi en un des composants du fluide à séparer et des moyens d'isolation de l'appareil d'échange, par exemple une enceinte isolée contenant l'appareil d'échange.

L'appareil de séparation peut comprendre deux zones conçues pour fonctionner à des pressions différentes, les moyens pour envoyer un fluide à séparer au corps d'échange comprenant au moins deux composants étant reliée à une première zone et les moyens pour sortir d'au moins une extrémité de l'appareil au moins un fluide séparé enrichi en un des composants du fluide à séparer étant reliée à une deuxième zone conçue pour opérer à une pression plus basse que celle de la première zone.

L'invention peut comprendre un procédé de séparation d'un mélange gazeux, tel que l'air utilisant un appareil tel que décrit ci-dessus.

L'usage d'une multiplicité de colonnes contenant des moyens permettant le transfert de matière et de chaleur direct, les colonnes étant alimentées toutes ou substantiellement toutes par un débit du même fluide, permet d'effectuer une séparation et/ou un mélange de fluides, par exemple un lavage et/ou une distillation.

La surface de contact des garnissages est très supérieure à la surface des canaux qui les contiennent. Ces garnissages ne participent pas à la résistance à la pression car ils ne sont pas liés mécaniquement aux parois des canaux.

La HETP des garnissages est de préférence inférieure à 100mm pour des mélanges de gaz de l'air à pression atmosphérique.

D'autres caractéristiques, détails et avantages ressortiront plus clairement à la lecture de la description détaillée donnée ci-après, à titre indicatif, en relation avec les figures suivantes :
- La figure 1 est une vue schématique en perspective d'un appareil d'échange de chaleur et/ou de matière fabriqué selon la présente invention ;
- La figure 2 est une vue partielle, selon une coupe horizontale, de l'appareil d'échange de chaleur et/ou de matière selon l'invention;
- La figure 3 est une vue partielle, selon une coupe horizontale, de deux colonnes d'échange de chaleur et/ou de matière d'un appareil selon l'invention;
- La figure 4 illustre une coupe de l'intérieur d'un appareil d'échange de chaleur et de matière selon l'invention
- La figure 5illustre une disposition alternative des colonnes d'une zone de l'appareil selon l'invention
- La figure 6 illustre différentes façon de construire des colonnes d'une zone de l'appareil
- La figure 7 illustre un appareil selon l'invention.

Dans la suite de la description, les termes « moyen de transfert de matière et d'échange de chaleur direct et/ou indirect » et « moyen d'échange » seront utilisés sans distinction. De façon analogue, les termes « appareil d'échange de transfert de matière et d'échange de chaleur direct et/ou indirect » et « appareil » seront utilisés sans distinction. Une direction verticale correspond à une direction d'extension principale d'un appareil selon l'invention, lorsque cet appareil est dans une position fonctionnelle, c'est-à-dire une position dans laquelle un échange de matière et de chaleur direct et/ou indirect peut s'opérer.

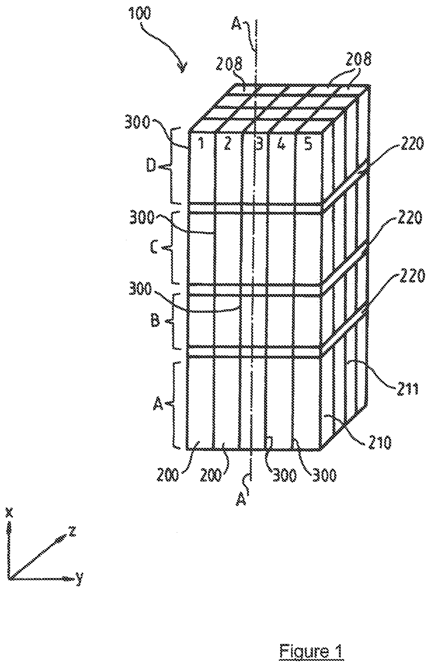

La figure 1 illustre ainsi un appareil 100 de transfert matière et d'échange de chaleur indirect et direct selon l'invention dans un mode d'assemblage par brasage qui comprend trois zones A, C et D de transfert de matière et d'échange direct et intégrant une zone B d'échange de chaleur indirect de type vaporiseur-condenseur. Cet appareil comprend une pluralité d'au moins deux, voire d'au moins trois, de préférence au moins dix, plaques planes 300 de section rectangulaire ainsi qu'une pluralité de colonnes 200 de transfert de matière et d'échange de chaleur direct. Les plaques planes 300 sont de la même forme et ont les mêmes dimensions. Les plaques peuvent être pleines, c'est-à-dire non-perforées.

Or une plaque peut être considérée pleine même en comprenant un nombre de perforations localisées pour permettre le passage de fluide d'un passage à celui adjacent ou pour équilibrer la distribution du liquide ou les pertes de charge côté gaz. L'appareil est en forme de bloc parallélépipédique à section rectangulaire, voire carrée. La longueur de l'appareil est celle des plaques selon l'axe X. Sa largeur est celle des plaques selon l'axe Z et son épaisseur est fonction du nombre de plaques et des dimensions selon l'axe Y des colonnes d'échange de chaleur et/ou de matière.

Ces plaques 300 sont disposées avec leur longueur à la verticale selon l'axe X et leur largeur à l'horizontale selon l'axe Z en usage comme moyen d'échange de chaleur et de matière.

Selon l'exemple illustré ici, l'appareil comprend cinq plaques planes 300 et quatre-vingt colonnes 200. Une sixième plaque plane 300 formant partie de l'empilement doit normalement couvrir la surface définie par la longueur de l'appareil et sa largeur. Cette plaque n'est pas illustrée pour mieux apercevoir la construction de l'appareil.

La longueur des plaques 300 est au moins égale à 1 m, de préférence au moins égale à 2 m, voire au moins égale à 3 m

Les colonnes sont disposées dans trois zones A, C, D, chaque zone comprenant vingt colonnes disposées en cinq rangées 1,2,3,4,5 chaque rangée comprenant quatre colonnes. Les colonnes 200 sont toutes de construction identiques, même si leurs dimensions peuvent différer. Ici chacune des soixante colonnes a la même section carrée. Les colonnes peuvent toutes avoir la même section rectangulaire ou simplement la même section.

Ces colonnes sont de préférence des colonnes facilement disponibles dans le commerce qui peuvent être commandées en grande quantité, à bas prix et avec les dimensions et géométries correspondant à leur rôle dans l'appareil. Ceci permet à la fois de standardiser des appareils pour simplifier leur fabrication et en réduire les coûts et aussi de dimensionner d'autres appareils plus précisément si les besoins du client sont plus pointus. Dans la direction Y, ces colonnes ont typiquement une dimension de quelques centimètres c'est-à-dire entre 2 cm et 10 cm. Dans la direction Z, cette dimension est aussi typiquement de quelques centimètres voire quelques décimètres.

Les colonnes d'une même zone A, C ou D ont la même longueur pour former un bloc parallélépipédique de vingt colonnes 200.

Dans la section B, pour assurer un échange de chaleur indirect de type vaporiseur condenseur, on peut diviser l'empilage par des tôles intercalaires 301 et utiliser des ondes d'échange classiques telles que décrites par l'ALPEMA. L'intérêt de disposer le vaporiseur-condenseur dans l'appareil, outre la combinaison des fonctions est d'assurer une certaine équidistribution des débits dans les différents passages (séparés par les tôles 300), soit en assurant le reflux liquide pour la zone A et en étant le moteur de de l'écoulement du gaz dans ce passage grâce à la condensation, soit en assurant le rebouillage des zones C et D en vaporisant partiellement le liquide issu de la zone C de manière à assurer un débit de gaz montant dans les zones C et D. Le nombre de passages dans la section B est de préférence à minima deux passages de manière à avoir au-dessus de chaque passage de la zone A déterminé par les tôles 300 un passage dans la zone B fonctionnant en condensation de manière à alimenter la zone A en liquide et en-dessous de chaque passe de la zone C un passage dans la zone B fonctionnant en vaporisation de manière à alimenter la zone C en gaz.

Il sera compris que les zones peuvent avoir des longueurs différentes selon la fonctionnalité qu'elles doivent avoir et la longueur des colonnes est choisie en fonction de celle des zones.

Les parois des colonnes sont de préférences pleines de sorte qu'un fluide ne puisse les traverser.

Le nombre de colonnes dans chaque section peut être différent d'une section à une autre. Les colonnes ne sont pas forcément de section carrée mais peuvent avoir une section rectangulaire, voire polygonale, par exemple triangulaire ou d'une forme polygonale avec deux faces parallèles, par exemple, octogonale.

Chaque colonne 200 est en sandwich entre deux plaques planes 300, en contact avec ces deux plaques d'où l'intérêt d'avoir une section avec deux parois parallèles. Il sera compris que des plaques planes 500 peuvent être disposées sur les faces des colonnes à droite et à gauche de la figure 1 (dans le plan (X,Z) pour fermer l'appareil, ces plaques n'étant pas illustrées pour permettre de voir la structure intérieure de l'appareil.

Alternativement il est possible d'augmenter l'épaisseur des plaques planes 300 situés à l'extérieur de l'appareil pour rendre l'appareil plus solide.

Chaque espace entre une paire de plaques adjacentes 300 contient un alignement 208 de quatre colonnes 200 qui se touchent suivant l'axe Z.

Il y aura également éventuellement des barres 400 pour fermer les espaces entre les plaques 300 sur le devant et à l'arrière de l'appareil 100, mais celles-ci empêcheraient de voir les colonnes 200 et donc ne sont pas illustrées ici.

Néanmoins il est envisageable que les barres 400 ne soient pas présentes, et que l'étanchéité soit assurée par les colonnes elles-mêmes ou par un autre moyen, tel que la colle.

Dans cette figure, comme chaque colonne a la même section et chaque zone comprend le même nombre de colonnes, il est facile d'arranger chaque colonne 200 d'une rangée directement en dessous la colonne de la zone supérieure.

Chaque colonne est en contact avec une autre colonne si elle se trouve en bout de rangée ou avec deux autres colonnes.

La description qui va être faite ci-après de l'une d'elles s'applique mutatis mutandis à l'ensemble des colonnes 200 constitutives de l'appareil 100 illustré sur la figure 1.

Selon l'exemple illustré ici, l'appareil 100 est représenté dans sa position de fonctionnement. On entend par « position de fonctionnement » une position dans laquelle l'appareil 100 peut être utilisé. Chaque colonne 200 présente un axe d'extension principal parallèle à la direction d'extension principale X de l'appareil 100 d'échange de chaleur et/ou de matière. Lorsque l'appareil 100 est dans une position verticale, c'est-à-dire sa position de fonctionnement, cet axe X d'extension principal est un axe vertical. Il est entendu qu'il ne s'agit que d'un exemple de réalisation de la présente invention et que l'appareil 100 ainsi que les colonnes 200 constitutives de cet appareil 100 pourraient présenter une forme différente sans sortir du contexte de la présente invention. L'axe Y représente l'empilage de l'appareil qui est fonction du nombre de plaques 300 empilées et des dimensions des colonnes 200. L'axe Z représente la largeur de l'appareil qui correspond à la largeur des plaques 300.

L'appareil comprend éventuellement un moyen d'obturation constitué par des barres latérales 400 reliées de façon étanche au bord des plaques.

Un tel appareil 100 est configuré pour permettre au moins un transfert de matière et d'échange de chaleur indirect entre deux fluides.

Par exemple, l'appareil peut ainsi être configuré pour permettre un échange de chaleur et de matière entre un liquide qui circule dans l'appareil selon un premier sens et un gaz qui circule dans l'appareil selon un deuxième sens. Il est entendu que tout autre procédé d'échange de chaleur et de matière entre deux fluides peut être mis en œuvre par l'appareil 100 selon l'invention sans sortir du contexte de celle-ci. Par exemple, l'appareil 100 peut être configuré pour mettre en œuvre un procédé de lavage et/ou un procédé de distillation.

L'appareil peut permettre le contact pour l'échange de matière et de chaleur entre une phase gazeuse montante suivant l'axe de l'appareil et une phase liquide descendante sous l'effet de la gravité.

L'appareil peut également contenir la pression de fonctionnement grâce aux liaisons mécaniques par brasage entre plaques et barres latérales.

En tout état de cause, l'appareil 100 selon l'invention comprend au moins une arrivée du premier fluide, par exemple une arrivée de liquide, et au moins une arrivée du deuxième fluide, par exemple une arrivée de gaz, ces arrivées de fluides n'étant pas représentées sur les figures décrites ici.

Chaque colonne 200 comprend quatre parois 202 entourant un espace 204 ouvert aux deux extrémités pour permettre le passage de fluide à travers la colonne dans le sens de la longueur. Aucun fluide ne peut traverser les quatre parois.

La colonne contient un moyen de transfert de masse et de chaleur. Ce moyen peut être un garnissage de type structuré ou vrac.

On entend par garnissage tout type de structure permettant d'obtenir une surface de contact important entre une phase liquide et une phase gazeuse et ainsi d'améliorer les échanges entre la phase liquide et la phase gazeuse.

La surface de contact de ce garnissage est supérieure à la surface de contact constituée par les parois internes des colonnes 200, de préférence très supérieure.

On appelle garnissage de type vrac, des empilements anarchiques, aléatoires, d'éléments unitaires possédant des formes particulières, par exemple des anneaux, des spirales... Les échanges de chaleur et/ou de matière se réalisent à l'aide de ces éléments unitaires. Ces éléments unitaires peuvent être en métal, en céramique, en plastique ou en matériaux analogues. « Packed Bed Columns » de N. Kolev, éd Elsevier, 2006 pp 154-161 décrit des exemples d'élément unitaire de garnissage vrac.

Le garnissage vrac offre des qualités intéressantes en termes d'efficacité de transfert, faible perte de charge et simplicité d'installation., il comprend par exemple des anneaux de Raschig, des anneaux de Pall, des billes, des garnissages prismatiques en spirale. D'autres types de garnissages sont évidemment envisageables, tels que les garnissages structurés, plus complexes de mise en œuvre, ou la mousse métallique.

L'usage de garnissages en vrac est particulièrement recommandé car il permet d'avoir à portée de main une source de garnissage facilement disponible dans le commerce qui peut être choisi pour avoir des caractéristiques très particulier ou acheté en grande quantité à bas prix pour des appareils standardisés. Ces garnissages sont facilement disponibles dans le commerce qui peuvent être commandés en grande quantité, à bas prix et avec les dimensions et géométries correspondant à leur rôle dans l'appareil. Ceci permet à la fois de standardiser des appareils pour simplifier leur fabrication et en réduire les coûts et aussi de dimensionner d'autres appareils plus précisément si les besoins du client sont plus pointus.

De préférence, la colonne est entièrement remplie par le garnissage.

Les plaques, les colonnes et les moyens de transfert de masse et de chaleur sont de préférence en métal, par exemple en aluminium ou en titane. Le garnissage peut être en acier inoxydable ou en un matériau plus compatible avec l'oxygène comme le cuivre, le nickel, l'linconel ^{®}, le Monel ^{®}...

La plaque de chaque paire de plaques adjacentes est contiguë aux colonnes entre la paire de plaques et les colonnes dans l'espace entre la paire de plaque sont contiguës les unes aux autres.

De préférence, les colonnes ne sont pas revêtues de matériau de brasage, mais elles peuvent l'être. Ce sont les tôles dites séparatrices 300 qui sont en général revêtues de brasure des deux côtés.

De préférence, l'espace entre deux plaques adjacentes a une largeur substantiellement égale à une des petites dimensions de la colonne d'échange, de sorte que chaque colonne touche deux plaques adjacentes, même avant l'opération de brasage.

Chaque colonne d'une zone C peut être séparée de la colonne de la zone adjacente D par des moyens de distribution ou de séparation 220, en contact avec les plaques 300 adjacentes.

De préférence, comme illustré, les moyens de distribution sont communs aux quatre colonnes d'un alignement 208 entre deux plaques 300. Par contre les moyens de distribution sont disposés dans les espaces entre deux plaques 300 et ne traversent pas les plaques.

Une fois les plaques, les colonnes pré-remplies de garnissage et les moyens de distribution mis en place, l'appareil est placé dans un four en atmosphère inerte ou réductrice et brasé pour solidariser les colonnes et les moyens de distribution avec les plaques.

La température du four est choisie de sorte que les colonnes sont solidarisées chacune à deux plaques sur des côtés opposés, ce qui suffit pour que l'appareil forme un bloc ensuite.

Par contre, les garnissages ne sont pas altérés par l'opération de brasage de sorte qu'un fluide introduit dans les colonnes puisse être séparé par une série d'étape de condensation et de vaporisation sur les garnissages des colonnes. De même les colonnes ne sont pas brasées entre elles.

La température maximale subie par l'appareil pendant le brasage est inférieure à la température de fusion des plaques, une plaque étant considérée comme étant distincte de son revêtement de brasure, à la température de fusion des colonnes et de préférence à la température de fusion du moyen d'échange de chaleur et de matière.

Le brasage crée une liaison métallique entre les plaques et les colonnes et moyens de distribution en contact avec les plaques. L'usage de colonnes à section polygonale peut permettre d'avoir une grande surface de contact en commun avec les plaques et ainsi une meilleure cohésion de l'appareil.

Les colonnes n'ont pas besoin d'être attachées les unes aux autres avant l'étape de brasage, ce qui simplifie considérablement la fabrication de l'appareil.

De préférence ce sont des colonnes isolées, chacune indépendante des autres. Leurs dimensions et les moyens d'introduction de fluides dans les colonnes sont choisis pour limiter les arrivées de gaz ou de liquide vers les plaques.

Les moyens de distribution sont également solidarisés aux plaques par l'opération de brasage et ne sont pas fixés aux colonnes ou aux plaques avant l'opération de brasage.

Il est préférable que le fluide à séparer ou à mélanger soit introduit dans chacune des colonnes et l'appareil comprend des moyens d'introduction d'une fraction du fluide dans chacune des colonnes d'une des zones A, C ou D, de préférence dans la partie inférieure de la zone D.

Le fluide à séparer ou à mélanger est envoyé uniquement dans les colonnes et n'est pas directement en contact avec les plaques.

Ensuite le fluide à séparer s'enrichit en son composant le plus léger en montant dans les garnissages de chaque colonne en passant d'une zone de colonnes à celle au-dessus.

Tel que cela sera plus amplement détaillé ci-après, chaque colonne 200 comprend au moins une paroi périphérique 202 qui délimite un volume interne de la colonne 200 concernée.

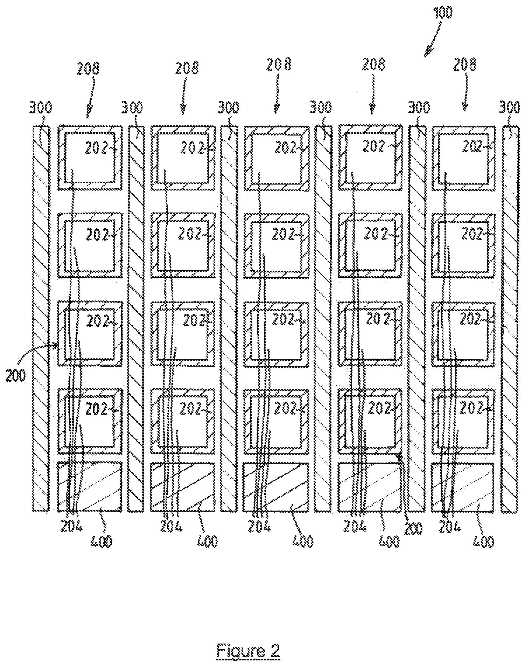

Plus précisément, chaque paroi périphérique 202 comprend au moins une face externe 211 par l'intermédiaire de laquelle elle est juxtaposée à une autre colonne 200, c'est-à-dire à la face externe de la paroi périphérique de cette autre colonne, et une face interne 212, par exemple visible sur la figure 2, qui délimite ce volume interne. Au moins un moyen d'échange de chaleur et de matière 230 - également représenté sur la figure 2 - est agencé dans ce volume interne.

Avantageusement, au moins un moyen d'échange de chaleur et de matière est agencé dans chaque colonne 200, chacun de ces moyens d'échange étant reçu dans un compartiment 204 de la colonne 200 concernée, chaque compartiment 204 étant délimité vers le haut, au moins en partie, par au moins un dispositif de distribution 220. Ces dispositifs de distribution 220 sont configurés pour assurer une répartition homogène d'au moins le premier fluide, avantageusement du premier fluide et du deuxième fluide, sur le(s) moyen(s) d'échange de chaleur et/ou de matière. On comprend que cette homogénéisation permet de favoriser les échanges de chaleur et de matière qui s'opèrent dans ces moyens d'échange.

Selon l'exemple illustré sur la figure 1, l'appareil 100 comprend trois dispositifs de distribution 220, séparant ainsi l'appareil en quatre zones. Il est entendu qu'il ne s'agit que d'un exemple particulier de réalisation de la présente invention et que cet exemple n'est en rien limitatif de la présente invention.

Ces quatre zones peuvent opérer à des pressions différentes et/ou avoir des fonctions différentes. Par exemple la zone A peut fonctionner à 6 bars et les zones C et D à une pression de 1,4 bars.

Avantageusement, les éléments disposés dans l'appareil 100 sont brasés ensemble au cours de l'opération de brasage qui permet la solidarisation des colonnes 200 entre elles. Autrement dit, l'appareil 100 d'échange de chaleur et/ou de matière est totalement assemblé en une unique étape.

Après le brasage, si l'appareil doit fonctionner à une température très basse ou très élevée par rapport à l'ambiant, il peut être revêtu d'isolation. Sinon l'appareil peut être disposé à l'intérieur d'une enceinte isolée.

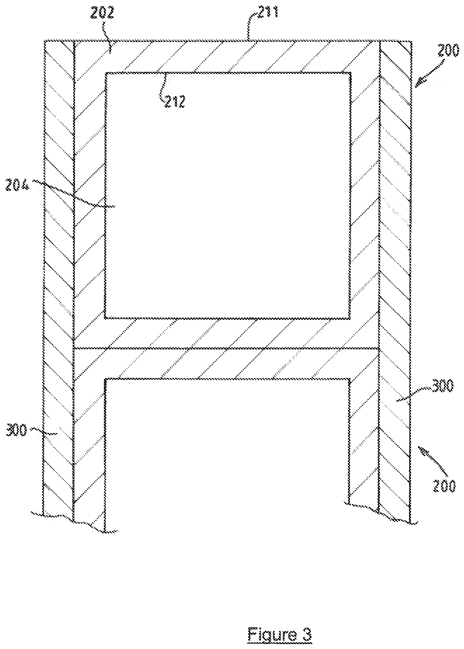

En référence à la figure 2 et la figure 3 nous allons maintenant décrire de manière plus détaillée un exemple d'une colonne d'échange d'un appareil selon l'invention contenant un moyen d'échange de chaleur et/ou de matière ainsi que son agencement de l'appareil. Ces figures 2 et 3 illustrent, partiellement, une coupe horizontale, c'est-à-dire une coupe réalisée selon un plan dans lequel s'inscrit l'axe X d'extension principal des colonnes 200, de la figure 1.

La figure 2 illustre un exemple de réalisation de la présente invention dans lequel montrant les vingt colonnes d'une zone de l'appareil. Les dimensions des espaces entre colonnes 200 et entre colonne et plaque sont exagérées pour mieux apprécier que chaque colonne 200 est individuelle et n'est pas attachée ni à la plaque adjacente ni aux colonnes avoisinantes avant le brasage. La dimension des plaques 300 est également exagérée car en général elle sera de l'ordre de 1 mm alors que les tubes carrés 202 auront des dimensions centimétriques et des épaisseurs de quelques millimètres selon les besoins de résistance mécanique à la compression à haute température lors de la phase brasage dans un four et de résistance mécanique à la pression lors de l'utilisation de l'appareil.

Dans cet exemple, l'appareil est divisé en une série de zones mais l'appareil peut dans l'absolu ne comprendre qu'une seule zone, auquel cas, la longueur des colonnes est quasiment celle des plaques.

Dans le cas plus probable, où l'appareil comprend plusieurs zones, les colonnes auront une longueur au plus égale à celle de l'étendue de la zone dans le sens de la longueur de la plaque.

On voit qu'entre chaque paire de plaques 300 on trouve un alignement de quatre colonnes 200 de section carré avec quatre parois 202 ayant une longueur qui peut être égale à la longueur de la plaque ou égale à une fraction de la longueur de la plaque.

La figure 3 montre une partie de la zone de la figure 2 après le procédé de brasage. On voit que la colonne 200 se trouve en sandwich entre deux plaques 300 revêtues de matériaux de brasage. Deux parois opposées des parois 202 de la colonne 200 se retrouvent reliées chacune à une plaque opposée 300. Les deux autres parois opposées 202 sont contiguës aux parois des colonnes adjacentes ou de la colonne adjacente et de la barre de fermeture. L'intérieur 204 de la colonne contient au moins un moyen de favoriser l'échange de chaleur et de matière, tel qu'un garnissage vrac.

Les figures 1, 2 et 3 décrivaient essentiellement un mode d'assemblage de l'appareil par brasage. On peut également réaliser un tel appareil par un autre mode d'assemblage ou une combinaison de mode d'assemblage tels que le brasage, le rivetage, le collage ou le soudage. A titre d'exemple, on pourrait réalisée la section B seule par brasage et l'assembler par soudage a des sections A, C et D qui auraient aussi été réalisées par soudage.

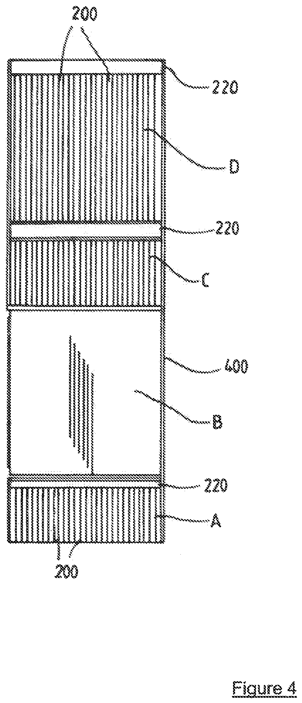

La figure 4 illustre une coupe d'un appareil selon l'invention capable de servir pour la distillation d'air, par exemple. La coupe correspond à celle de la ligne A-A de la figure 1 même si l'exemple de la figure 4 utilise des rangées de colonnes entre deux plaques avec beaucoup plus de colonnes que les quatre de la figure 1. Le sens de l'empilement des plaques 300 rentre dans la page (axe Y).

Vingt-huit colonnes 200 sont alignées dans l'espace entre les mêmes deux plaques adjacentes pour chacune des zones A,C,D la zone B ne contenant pas de colonnes 200. Il en est de même pour chaque paire de plaques de l'empilement de plaques. La zone A correspondant à la colonne moyenne pression est alimentée par son extrémité basse de sorte que le mélange gazeux refroidi à séparer, ici l'air, est envoyé à chacune des colonnes 200 de la zone A. L'air monte dans les colonnes en s'enrichissant en azote et en s'appauvrissant en oxygène au fur et à mesure qu'il passe dans les garnissages vrac à l'intérieur 204 de chaque colonne. Il est possible qu'une petite minorité des colonnes ne soient pas alimentées par l'air sans sortir de l'invention. Ensuite le gaz transite par le moyen de distribution 220 pour passer dans la zone B. La zone B est alimentée par de l'oxygène liquide tombant de la zone C à travers un moyen de distribution. La zone B comprend les passages alternés de vaporisation d'oxygène et de condensation d'azote, chaque passage servant soit à la vaporisation soit à la condensation et la chaleur transitant à travers les plaques 300 délimitant les passages.

L'azote liquéfié distribué par le moyen de distribution 220 retombe dans les colonnes de la zone A pour servir de reflux.

L'oxygène gazeux monte dans la zone C. La zone C est également alimentée par le haut par un liquide enrichi en oxygène provenant de la partie inférieure de la zone A. De l'azote condensé provenant du condenseur B est également envoyé au moyen de distribution 220 au-dessus de la zone D.

Les liquides envoyés aux zones D et C sont séparés dans ces zones par distillation pour produire un gaz riche en azote soutiré des colonnes 200 de la zone D et un liquide riche en oxygène est pris dans les colonnes 200 de la zone C.

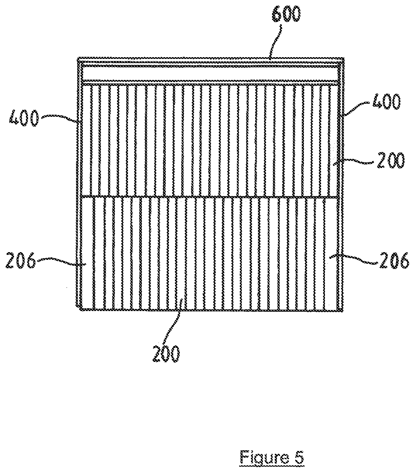

La figure 5 montre que les colonnes 200 n'ont pas forcément la même longueur que l'étendue de la zone dans le sens de la longueur de la plaque 300. La zone illustrée peut être l'une des zones A, C ou D.

Ici les colonnes 200 ont une longueur égale à la moitié de la dimension de la zone dans le sens vertical. Les colonnes de dessus 200 sont décalées par rapport à celles de dessous en installant des colonnes de section rectangulaires 206 de part et d'autre du groupe de colonnes 200 à section carrée.

Ceci permet un plus grand brassage de liquide et de gaz au sein d'une zone, puisque les liquides et les gaz ne restent pas dans une seule colonne en traversant la zone.

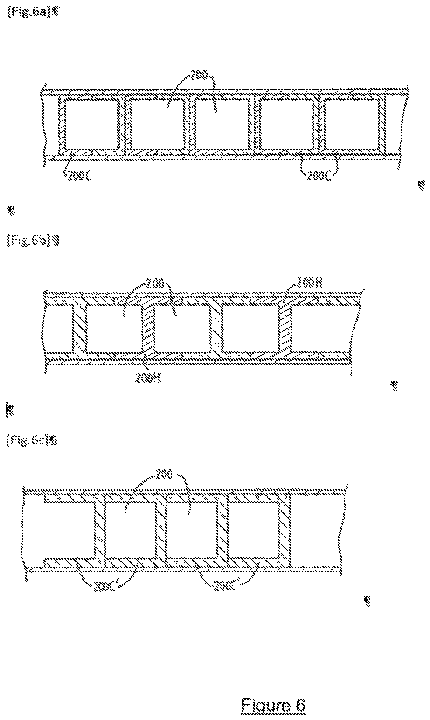

La figure 6 illustre une construction possible alternative pour les colonnes 200. Comme illustré dans la figure 4, elles peuvent être formées par des tubes à section carrée posés l'un à côté de l'autre. Il est également possible de former des colonnes en utilisant des tubes à section rectangulaire. Une autre possibilité est de juxtaposer des structures ouvertes pour former des colonnes, chaque colonne ayant des parois appartenant à deux éléments rallongés différents.

Ainsi dans la Figure 6a, les colonnes sont formées par des éléments 200C ayant une section en C avec les deux extrémités de la section d'un élément touchant les deux extrémités de la section de l'élément adjacent.

Dans la Figure 6b, les colonnes sont formées par des éléments 200H ayant une section en H avec deux extrémités de la section d'un élément touchant deux extrémités de la section de l'élément adjacent.

Dans la Figure 6c, les éléments 200C' ayant une section en C sont disposés avec le fond de l'élément touchant les extrémités de l'élément à côté.

Il est possible d'envisager de disposer du matériau de brasement sur les parties des éléments devant être en contact afin de solidifier les colonnes lors du brasage de la matrice.

Ainsi le groupe de colonnes creuses est constitué par un regroupement d'éléments qui forment chacun partie de deux colonnes creuses.

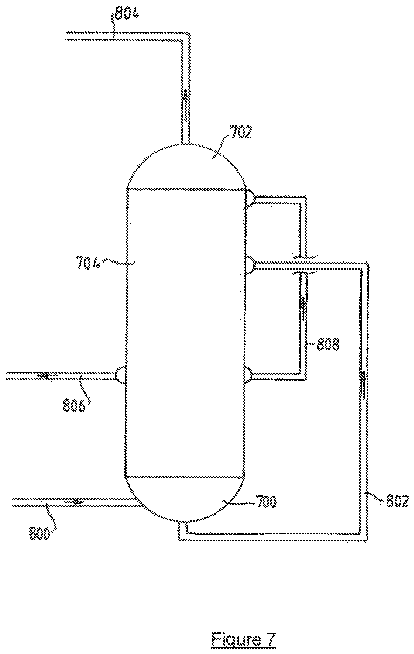

La figure 7 montre l'appareil de la figure 1 en état d'usage, la face 704 étant la dernière plaque de l'empilement (donc dans le plan XZ).

De l'air rentre par la conduite 600 dans un demi-cylindre 700 chapeautant la face inférieure du bloc 100. L'air remonte dans toutes les colonnes 200, la pression et le débit étant choisis pour permettre d'alimenter toutes les colonnes sans utiliser de moyen particulier dans le demi-cylindre pour faciliter la distribution d'air. Un liquide enrichi en oxygène tombe de la zone A en cuve du demi-cylindre 700. Ce liquide est envoyé par la conduite 800 vers la zone D. Un liquide enrichi en azote est envoyé du haut de la zone A par la conduite 808 vers le haut de la zone D.

Un produit riche en oxygène pouvant être un gaz ou un liquide est soutiré par la conduite 806.

Un produit gazeux riche en azote arrive de toutes les colonnes 200 de la zone D vers un demi-cylindre 702 coiffant la face supérieure du bloc 100 et est soutiré par la conduite 804.

Les arrivées et sorties de fluides se trouvent au même niveau qu'un moyen de distribution 220 permettant de distribuer, au moyen d'un demi-cylindre, le fluide sur chaque colonne de chaque rangée de colonnes ou de recueillir un fluide provenant de chaque colonne de chaque rangée de colonnes. Les moyens de distribution 220 sont situés de part et d'autre de chaque plaque et ne permettent pas à un fluide de passer d'un côté d'une plaque à l'autre.

Pour isoler l'appareil, celui-ci peut être contenu dans une boîte froide classique contenant de la perlite ou sinon un isolant solide peut revêtir les parois de l'appareil et dans ce cas, aucune enceinte n'est requise pour enfermer l'isolant.

## Revendications

1. Appareil de transfert de matière et d'échange de chaleur direct (100) constitué par une pluralité de colonnes (200), un seul empilement d'au moins deux, de préférence au moins trois, plaques pleines métalliques (300) de section rectangulaire, les plaques étant substantiellement toutes de même forme et dimensions et parallèles à une direction déterminée , chaque plaque étant séparée de la plaque adjacente, au moins dans une première zone (A,C,D) de transfert de matière et d'échange de chaleur direct de l'appareil, **caractérisé en ce que** l'appareil est constitué par un groupe de colonnes (200) creuses en métal qui sont alignées et de section polygonale ayant au moins deux surfaces parallèles, de préférence rectangulaire, voire carrée, les canaux étant parallèles à la direction déterminée et contiguës les unes aux autres, éventuellement toutes les colonnes de l'appareil étant parallèles les unes aux autres, les colonnes de chaque groupe étant chacune en contact avec les deux plaques métalliques de part et d'autre du groupe, au moins certaines des colonnes d'un groupe, voire de chaque groupe, voire toutes les colonnes d'un groupe, contenant un moyen d'échange de chaleur et de matière (230), par exemple un garnissage tel qu'un garnissage métallique structuré ou en vrac.

2. Appareil selon la revendication 1 dans lequel les plaques (300) sont solidarisées avec les colonnes (200) par brasage ou par collage.

3. Appareil selon la revendication 1 ou 2 dans lequel les plaques (300), les colonnes (200) et éventuellement le moyen d'échange de chaleur et de matière (230) sont tous formés i) du même métal ou ii) du même alliage ou iii) d'alliages du même métal principal.

4. Appareil selon l'une des revendications précédentes dans laquelle les plaques (300) et/ou les colonnes (200) et/ou le moyen de transfert de matière et d'échange de chaleur (230) direct et/ou indirect est/sont en un des métaux suivants : aluminium, acier inoxydable, nickel, cuivre ou titane.

5. Appareil selon l'une des revendications précédentes dans laquelle la dimension minimale d'un bord de la section d'une colonne (200) est supérieure à 2 cm et de préférence supérieure à 4 cm.

6. Appareil selon l'une des revendications précédentes dans laquelle la longueur d'une plaque (300) est au moins égale à 1 m, de préférence au moins égale à 2 m, voire au moins égale à 4 m.

7. Appareil selon l'une des revendications précédentes dans lequel la première zone (A,C,D) constitue une partie de l'appareil délimitée par la largeur et l'épaisseur de l'empilement et par une partie de la longueur de l'empilement.

8. Appareil selon l'une des revendications précédentes comprenant des moyens pour alimenter au moins les deux tiers des, de préférence toutes les colonnes (200) d'au moins la première zone (A,C,D) avec le même fluide.

9. Appareil selon l'une des revendications précédentes comprenant des moyens pour recueillir le même fluide d'au moins les deux tiers, de préférence de toutes les colonnes (200) d'au moins une première zone (A,C,D).

10. Appareil selon la revendication 7 combinée avec la revendication 8 et/ou 9 dont l'empilement comprenant une deuxième zone (B), qui est une zone d'échange de chaleur indirect, constituée par une partie de l'appareil délimitée par la largeur et l'épaisseur de l'empilement et par une partie de la longueur de l'empilement, comprenant des moyens pour alimenter un passage sur deux des passages entre deux plaques par un fluide provenant de la première zone (A,C) ainsi que des moyens pour alimenter le reste des passages de la deuxième zone par un fluide calorigène ou frigorigène afin de permettre un échange de chaleur indirect avec ce fluide.

11. Appareil selon la revendication 7 combiné avec la revendication 8 et/ou 9 comprenant une deuxième zone d'échange de chaleur direct (B) constituant une partie de l'appareil délimitée par la largeur et l'épaisseur de l'empilement et par une partie de la longueur de l'empilement et comprenant des moyens pour alimenter au moins les deux tiers, de préférence toutes les colonnes (200) d'une zone (A,C,D) avec le même fluide et/ou des moyens pour recueillir le même fluide d'au moins les deux tiers des colonnes, de préférence de toutes les colonnes, d'une zone.

12. Appareil de séparation, par exemple par distillation ou par lavage, pour usage à des températures en dessous de 0°C comprenant un appareil d'échange de matière et de chaleur selon l'une des revendications précédentes, l'appareil étant orienté de sorte qu'en usage un liquide introduit dans une colonne (200) coule dans chaque colonne par effet de gravitation, des moyens pour envoyer un fluide à séparer au corps d'échange comprenant au moins deux composants, des moyens pour sortir d'au moins une extrémité de l'appareil au moins un fluide séparé enrichi en un des composants du fluide à séparer et des moyens d'isolation de l'appareil d'échange, par exemple une enceinte isolée contenant l'appareil d'échange.

## Patentansprüche

1. Vorrichtung zum Stoffübergang und direkten Wärmeaustausch (100), welche aus mehreren Kolonnen (200) und einem einzigen Stapel aus wenigstens zwei, vorzugsweise wenigstens drei massiven Metallplatten (300) mit rechteckigem Querschnitt besteht, wobei die Platten im Wesentlichen alle dieselbe Form und dieselben Abmessungen aufweisen und zu einer bestimmten Richtung parallel sind, wobei jede Platte von der benachbarten Platte wenigstens in einem ersten Bereich (A, C, D) des Stoffübergangs und direkten Wärmeaustauschs der Vorrichtung getrennt ist,
**dadurch gekennzeichnet, dass** die Vorrichtung aus einer Gruppe von hohlen Kolonnen (200) aus Metall besteht, welche zueinander ausgerichtet sind und einen polygonalen Querschnitt mit wenigstens zwei parallelen Flächen aufweisen, der vorzugsweise rechteckig oder sogar quadratisch ist, wobei die Kanäle parallel zu der bestimmten Richtung sind und aneinander angrenzen, wobei möglicherweise alle Kolonnen der Vorrichtung parallel zueinander sind, wobei sich die Kolonnen jeder Gruppe jeweils in Kontakt mit den zwei Metallplatten beiderseits der Gruppe befinden, wobei wenigstens einige der Kolonnen einer Gruppe oder sogar jeder Gruppe oder sogar alle Kolonnen einer Gruppe ein Mittel zum Wärme- und Stoffaustausch (230) enthalten, zum Beispiel eine Packung wie etwa eine strukturierte metallische Packung oder eine Füllkörperschüttung.

2. Vorrichtung nach Anspruch 1, wobei die Platten (300) mit den Kolonnen (200) durch Löten oder durch Kleben fest verbunden sind.

3. Vorrichtung nach Anspruch 1 oder 2, wobei die Platten (300), die Kolonnen (200) und möglicherweise das Mittel zum Wärme- und Stoffaustausch (230) alle i) aus demselben Metall oder ii) aus derselben Legierung oder iii) aus Legierungen desselben Hauptmetalls ausgebildet sind.

4. Vorrichtung nach einem der vorhergehenden Ansprüche, wobei die Platten (300) und/oder die Kolonnen (200) und/oder das Mittel zum Stoffübergang und direkten und/oder indirekten Wärmeaustausch (230) aus einem der folgenden Metalle besteht/bestehen: Aluminium, Edelstahl, Nickel, Kupfer oder Titan.

5. Vorrichtung nach einem der vorhergehenden Ansprüche, wobei die minimale Abmessung eines Randes des Querschnitts einer Kolonne (200) größer als 2 cm und vorzugsweise größer als 4 cm ist.

6. Vorrichtung nach einem der vorhergehenden Ansprüche, wobei die Länge einer Platte (300) wenigstens 1 m, vorzugsweise wenigstens 2 m oder sogar wenigstens 4 m beträgt.

7. Vorrichtung nach einem der vorhergehenden Ansprüche, wobei der erste Bereich (A, C, D) einen Teil der Vorrichtung bildet, der von der Breite und der Dicke des Stapels und von einem Teil der Länge des Stapels begrenzt wird.

8. Vorrichtung nach einem der vorhergehenden Ansprüche, welche Mittel zum Versorgen von wenigstens zwei Dritteln der Kolonnen, vorzugsweise aller Kolonnen (200), wenigstens des ersten Bereichs (A, C, D) mit demselben Fluid umfasst.

9. Vorrichtung nach einem der vorhergehenden Ansprüche, welche Mittel zum Sammeln desselben Fluids von wenigstens zwei Dritteln der Kolonnen, vorzugsweise von allen Kolonnen (200), wenigstens eines ersten Bereichs (A, C, D) umfasst.

10. Vorrichtung nach Anspruch 7 in Verbindung mit Anspruch 8 und/oder 9, deren Stapel einen zweiten Bereich (B) umfasst, welcher ein Bereich des indirekten Wärmeaustauschs ist, der von einem Teil der Vorrichtung gebildet wird, der von der Breite und der Dicke des Stapels und von einem Teil der Länge des Stapels begrenzt wird, und welcher Mittel zum Versorgen jedes zweiten Durchlasses von den Durchlässen zwischen zwei Platten mit einem Fluid aus dem ersten Bereich (A, C) sowie Mittel zum Versorgen der übrigen Durchlässe des zweiten Bereichs mit einem Wärme- oder Kältemittel, um einen indirekten Wärmeaustausch mit diesem Mittel zu ermöglichen, umfasst.

11. Vorrichtung nach Anspruch 7 in Verbindung mit Anspruch 8 und/oder 9, welche einen zweiten Bereich des direkten Wärmeaustauschs (B) umfasst, der einen Teil der Vorrichtung bildet, der von der Breite und der Dicke des Stapels und von einem Teil der Länge des Stapels begrenzt wird und Mittel zum Versorgen von wenigstens zwei Dritteln der Kolonnen, vorzugsweise aller Kolonnen (200), eines Bereichs (A, C, D) mit demselben Fluid und/oder Mittel zum Sammeln desselben Fluids von wenigstens zwei Dritteln der Kolonnen, vorzugsweise von allen Kolonnen, eines Bereichs umfasst.

12. Vorrichtung zur Trennung, zum Beispiel durch Destillation oder Waschen, zur Verwendung bei Temperaturen unter 0 °C, umfassend eine Vorrichtung zum Stoff- und Wärmeaustausch nach einem der vorhergehenden Ansprüche, wobei die Vorrichtung so ausgerichtet ist, dass im Betrieb eine Flüssigkeit, die in eine Kolonne (200) eingeleitet wird, in jeder Kolonne unter der Wirkung der Schwerkraft fließt, Mittel zum Leiten eines zu trennenden Fluids zum Austauschkörper, das wenigstens zwei Komponenten umfasst, Mittel zum Ausleiten, aus wenigstens einem Ende der Vorrichtung, wenigstens eines getrennten Fluids, das mit einer der Komponenten des zu trennenden Fluids angereichert ist, und Mittel zur Isolation der Austauschvorrichtung, zum Beispiel eine isolierte Kammer, welche die Austauschvorrichtung enthält.

## Claims

1. Direct heat exchange and material transfer apparatus (100) constituted by a plurality of columns (200), a single stack of at least two, preferably at least three, solid metal plates (300) of rectangular section, the plates being substantially all of the same shape and dimensions and parallel to a determined direction, each plate being separated from the adjacent plate, at least in a first direct heat exchange and material transfer zone (A,C,D) of the apparatus, **characterized in that** the apparatus is constituted by a group of hollow metal columns (200) that are aligned and have a section which is polygonal and has at least two parallel surfaces, which is preferably rectangular, or even square, the channels being parallel to the determined direction and contiguous with one another, optionally all the columns of the apparatus being parallel to one another, the columns of each group each being in contact with the two metal plates on either side of the group, at least some of the columns of a group, or even of each group, or even all the columns of a group, containing a material and heat exchange means (230), for example a packing such as a random or structured metal packing.

2. Apparatus according to Claim 1, wherein the plates (300) are secured to the columns (200) by brazing or by adhesive bonding.

3. Apparatus according to Claim 1 or 2, wherein the plates (300), the columns (200) and optionally the material and heat exchange means (230) are all formed i) of the same metal or ii) of the same alloy or iii) of alloys with the same main metal.

4. Apparatus according to one of the preceding claims, wherein the plates (300) and/or the columns (200) and/or the direct and/or indirect heat exchange and material transfer means (230) is/are made of one of the following metals: aluminum, stainless steel, nickel, copper or titanium.

5. Apparatus according to one of the preceding claims, wherein the minimum dimension of an edge of the section of a column (200) is greater than 2 cm and preferably greater than 4 cm.

6. Apparatus according to one of the preceding claims, wherein the length of a plate (300) is at least equal to 1 m, preferably at least equal to 2 m, or even at least equal to 4 m.

7. Apparatus according to one of the preceding claims, wherein the first zone (A, C, D) constitutes a part of the apparatus that is delimited by the width and the thickness of the stack and by a part of the length of the stack.

8. Apparatus according to one of the preceding claims, comprising means for supplying at least two thirds of, preferably all, the columns (200) of at least the first zone (A, C, D) with the same fluid.

9. Apparatus according to one of the preceding claims, comprising means for collecting the same fluid from at least two thirds of, preferably all, the columns (200) of at least a first zone (A, C, D).

10. Apparatus according to Claim 7 combined with Claim 8 and/or 9, of which the stack comprises a second zone (B), which is an indirect heat exchange zone, constituted by a part of the apparatus that is delimited by the width and the thickness of the stack and by a part of the length of the stack, comprising means for supplying one in two of the passages between two plates with a fluid coming from the first zone (A, C) and means for supplying the rest of the passages of the second zone with a calorigenic or refrigerant fluid in order to allow indirect heat exchange with this fluid.

11. Apparatus according to Claim 7 combined with Claim 8 and/or 9, comprising a second direct heat exchange zone (B) constituting a part of the apparatus that is delimited by the width and the thickness of the stack and by a part of the length of the stack and comprising means for supplying at least two thirds of, preferably all, the columns (200) of a zone (A, C, D) with the same fluid and/or means for collecting the same fluid from at least two thirds of the columns, preferably all the columns, of a zone.

12. Apparatus for separation, for example by distillation or by scrubbing, for use at temperatures below 0°C, comprising a heat and material exchange apparatus according to one of the preceding claims, the apparatus being oriented such that, in use, a liquid introduced into a column (200) flows in each column under gravity, means for sending a fluid to be separated to the exchange body comprising at least two components, means for extracting, from at least one end of the apparatus, at least one separated fluid enriched in one of the components of the fluid to be separated, and means for insulating the exchange apparatus, for example an insulated chamber containing the exchange apparatus.
